Europäisches Patentamt

**European Patent Office**

Office européen des brevets

(11) Publication number: **0 055 569**
**A2**

(12) # EUROPEAN PATENT APPLICATION

(21) Application number: **81305979.7**

(22) Date of filing: **21.12.81**

(51) Int. Cl.³: **G 01 S 15/93**
**G 01 S 15/08**

(30) Priority: **30.12.80 GB 8041484**

(43) Date of publication of application:
**07.07.82 Bulletin 82/27**

(84) Designated Contracting States:
**AT BE CH DE FR IT LI LU NL SE**

(71) Applicant: **STAR PRODUCTS LIMITED**
**382 Blackpool Road Lane Ends Trading Estate**
**Preston Lancashire PR2 2DS(GB)**

(72) Inventor: **Gregson, John David**
**Wood End Talbot Road**
**Lytham Lancashire(GB)**

(72) Inventor: **Thomas, Stephen**
**48 Grasmere Road**
**Blackpool Lancashire(GB)**

(74) Representative: **Quest, Barry et al,**
**M'CAW & CO. 41-51 Royal Exchange Cross Street**
**Manchester M2 7BD(GB)**

(54) Distance measuring system.

(57) A distance measuring device or proximity detector has an ultrasonic transducer (1, 35) which acts to direct ultrasonic energy at an object and to receive reflected energy therefrom, the time difference between transmitted and received pulses being used to give an indication of the distance between the transducer and the object.

The measured distance may be indicated visually and audibly.

In one embodiment the measured distance is displayed numerically on a digital display device (34) and an audible warning is given if the displayed distance falls below a preset value.

The transducer may be mounted on the back of a vehicle to assist in reversing and a cover (44) may be provided to protect the transducer when not in use.

Fig.14

Croydon Printing Company Ltd.

(EP13777)                     - 1 -
(26.11.81)

DISTANCE MEASURING SYSTEM

This invention relates to ultrasonic distance measuring
systems.

It is known to use ultrasonic distance measuring systems for focusing purposes in automatic cameras. For example, such systems are described in U.S. Patents Nos. 3,522,764, 3,523,275, 4,081,626, 4,085,297, 4,135,798, 4,148,574, 4,149,792, 4,153,903, 4,156,,567, 4,160,590, 4,168,895, 4,178,087, 4,182,563, 4,196,994, 4,199,244, 4,199,246 and 4,200,378. These known systems, however, serve the specific purpose of initiating and controlling operation of a camera lens position-adjusting mechanism.

An object of the present invention is to provide an ultrasonic distance measuring system of a simple yet versatile nature.

According to the invention therefore there is provided a distance measuring system comprising an ultrasonic transducer device which is operable to transmit and receive ultrasonic signals, and an electronic measuring circuit connected to said device and arranged to produce an output representative of a time difference between successive transmitted and received said signals, characterised in that said measuring circuit is connected to an

(EP13777)                    - 2 -
(26.11.81)

output device operable to produce a sensible output indicative of the duration of the said time difference.

With this arrangement, with the transducer arranged in line with an object such that a transmitted ultrasonic signal is reflected back from the object to the transducer to be received thereby, it will be appreciated that the distance between the object and the transducer can be determined in a particularly simple and convenient manner and an indication thereof can be given in terms of the time-dependent sensible output.

Moreover, in so far as the distance between the transducer and such object can be measured quickly and from a location remote from the object without requiring physical contact with same, it will be appreciated that the measuring system of the invention is particularly versatile and can be used for a wide range of measuring purposes.

The said output device may be operable to produce a visual display representative of a distance corresponding to said time difference. Said output device may comprise a lamp or the like, although preferably such device provides a visual numerical display and thus may comprise an electronic digital display device, a meter having a needle movable over a scale, a pen recorder or the like. Most preferably said visual numerical display is arranged to change in correspondence with changes in said time difference thereby to give a continuously updated display of actual distance, and with this arrangement the system may be used for measuring purposes for example in substitution for a tape measure, or for use where a first body is being manoeuvred relative to a second body and it is required to know the distance therebetween, or for use

in a manufacturing process or in the automatic handling
of goods or for evaluating the contents of a bulk storage
container, or for any other suitable purpose. The system
may be interfaceable with a computer to enable distance
measurements to be processed for storage and use as desired.

Alternatively or additionally, the said output device
may be operable to produce an audible output representative
of a distance corresponding to said time difference. Said
tone may be arranged to change (as for example in duration
and/or frequency in correspondence with changes in said
time difference thereby to give an audible indication
of actual distance. Where a tone of variable duration
and/or frequency is used the system may be particularly
suitable for use by a blind person.

The system of the invention may be used as a proximity
detector or warning device to give an indication, in terms
of a predetermined sensible output of said output device,
whenever a distance measured falls within a predetermined
range, or rises above or falls below a predetermined limit.
In this context the system may be used in the operation
of equipment, in manufacturing processes, in the handling
of goods, as a proximity detector for a blind person, to
guide a driver whilst reversing or driving behind another
vehicle, to warn a driver of a hazard, or for any other
suitable purpose. Said predetermined sensible output may
comprise triggered abrupt change in actuated or deactuated
state of a lamp or tone generator or other visual and/or
audible alarm and this may constitute the only sensible
output of the said output device or alternatively may be
in addition to a further sensible output thereof such as a
numerical distance display. Preferably a manual input
device is provided for pre-setting the predetermined distance or range of distances at which the predetermined

(EP13777)
(26.11.81)

- 4 -

sensible output is produced. Preferably also said manual input device comprises one or more electrical switches and such output device is arranged to produce said visual display indicative of the pre-set distance or range of distances during operation of said switch or switches.

Still further, the system of the invention may be used in conjunction with automatic equipment to control operation thereof. Thus, for example, the system may be used to effect automatic starting and/or stopping of transport devices, vehicles, machines, door opening mechanisms and so on.

With regard to the transducer device of the system this may take any suitable form and may comprise separate transmitter and receiver elements and/or may use a single element capable of performing both functions, such as a piezoelectric crystal. The device may be actuated with a single transmission pulse or alternatively with successive such pulses at a suitable preselected frequency. In a particularly preferred embodiment, the or each such pulse is composed of radiated energy at a range of frequencies, for example, four successive different frequencies. For reception purposes, the device may be connected to a digital gain controlled amplifier which initially, after production of the transmission pulse, is set to a low gain but then increases in gain until the received pulse is detected.

In one embodiment, said transducer is provided with a protective cover movable between positions at which it extends over and is retracted away from said transducer.

The invention will now be described further by way of example only and with reference to the accompanying drawings in which:-

Fig. 1     is a diagram showing the transducer device
           and associated components of one form of a
           system according to the invention;

Figs. 2 to 4 are diagrams showing different forms of
           electronic circuits for use with the arrange-
           ment of Fig. 1;

Figs. 5 to 13 are pulse diagrams relating to the
           arrangements of Figs. 1 to 4;

Fig. 14    is a diagram showing a further form of system
           according to the invention; and

Fig. 15    shows a housed transducer of the system of
           Fig. 14.

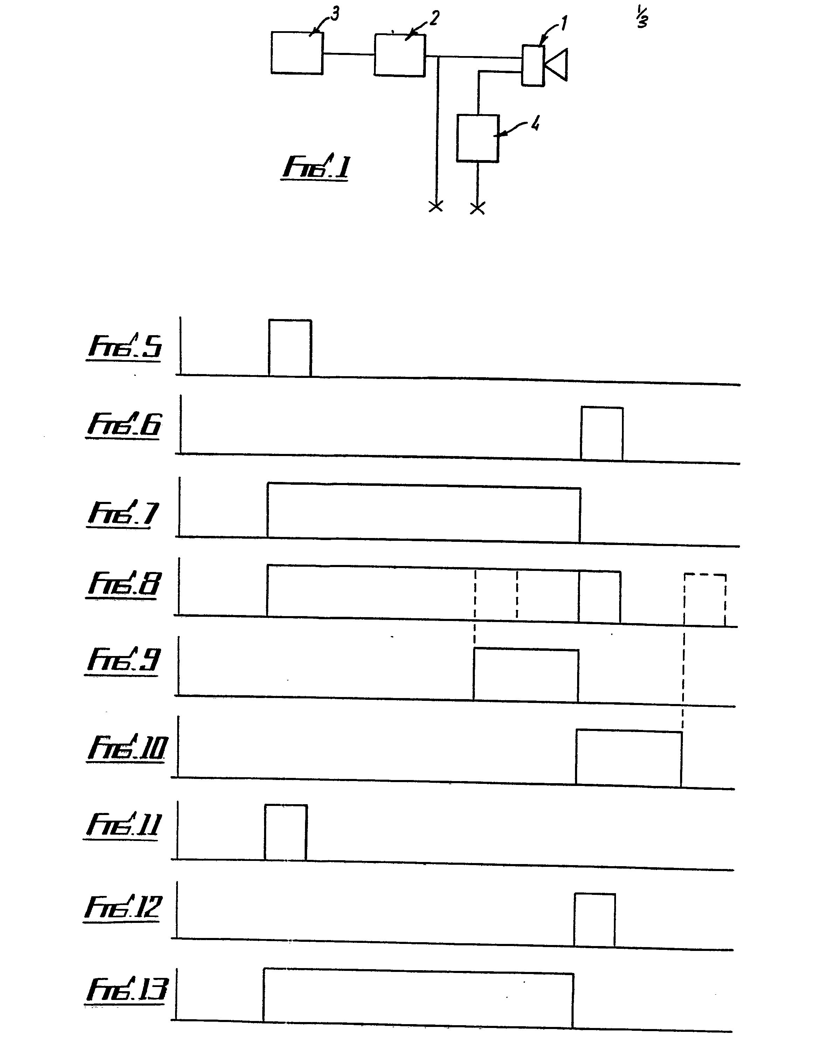

With reference to Fig. 1, an ultrasonic transducer device
1, such as a piezoelectric crystal is connected to control
circuitry including a clock device 2, an oscillator 3
and an amplifier 4, the arrangement being such that the
device 1 is fed with a train of ultrasonic impulses at
intervals (say 1/5 second) as determined by the clock
device 2.  Each such impulse is a composite impulse made
up of say four successive pulses of different (successively
greater) ultrasonic frequencies.  The frequency of the
clock device 2 will be preselected in dependence on the
range of distances to be measured.  The amplifier 4 is
connected to the device 1 to amplify ultrasonic impulses
received by the device 1.  The amplifier 4 is a digital
gain controlled amplifier which operates at a low gain
level immediately after production of a transmitted impulse and then increases in gain until an impulse is
received by the device 1.

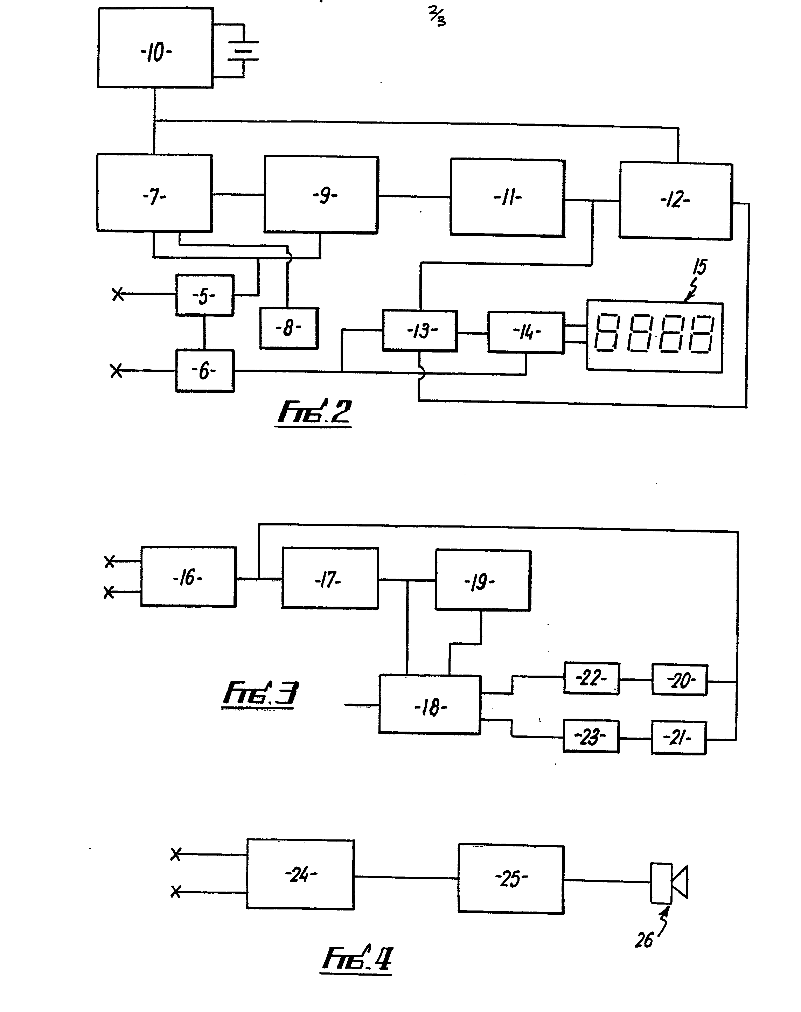

With the embodiment of Fig. 2, a transmitted pulse, as
derived from the oscillator 3, and a received pulse, as
derived from the amplifier 4, are fed respectively to a.c. coupling and latch circuits 5, 6.  The a.c. coupling circuit 5 is connected to a reset input of the latch circuit 6.

The a.c. coupling circuit 5 is connected to a BCD delay device 7 which provides a delay which is adjustable by means of a selection control 8, and a flip flop circuit 9.  The delay 7 receives an input from a master clock device 10 and the flip flop circuit 9 has an output which is connected to a monostable circuit 11.  The monostable circuit 11 is connected to a BCD counter 12 and also to a counter gate 13 and a drive output circuit 14 which drives  an LCD or LED digital display device 15.  The latch circuit 6 is connected to reset and store inputs of the counter gate 13 and drive output circuit 14.  The counter gate 13 has an input connected to the BCD counter 12 and an output connected to the drive output circuit 14. The counter 12 has an input connected to the clock 10.

In use a transmitted pulse acts to reset the latch circuit 6, the BCD delay 7 and the flip flop circuit 9 such that a reset signal is fed to the BCD counter 12, the gate 13 and the drive output 14 when clock signals fed to the BCD delay 7 have reached a preset count as selected with the device 8.  The counter 12 then counts clock signals and supplies an appropriately divided output thereof to the gate 13 and to the drive output 14 to provide a changing display on the device 15.  When the received pulse reaches the latch circuit 6 this resets the counter gate 13 and causes the drive output 14 to store the last count which is held displayed on the device 15.

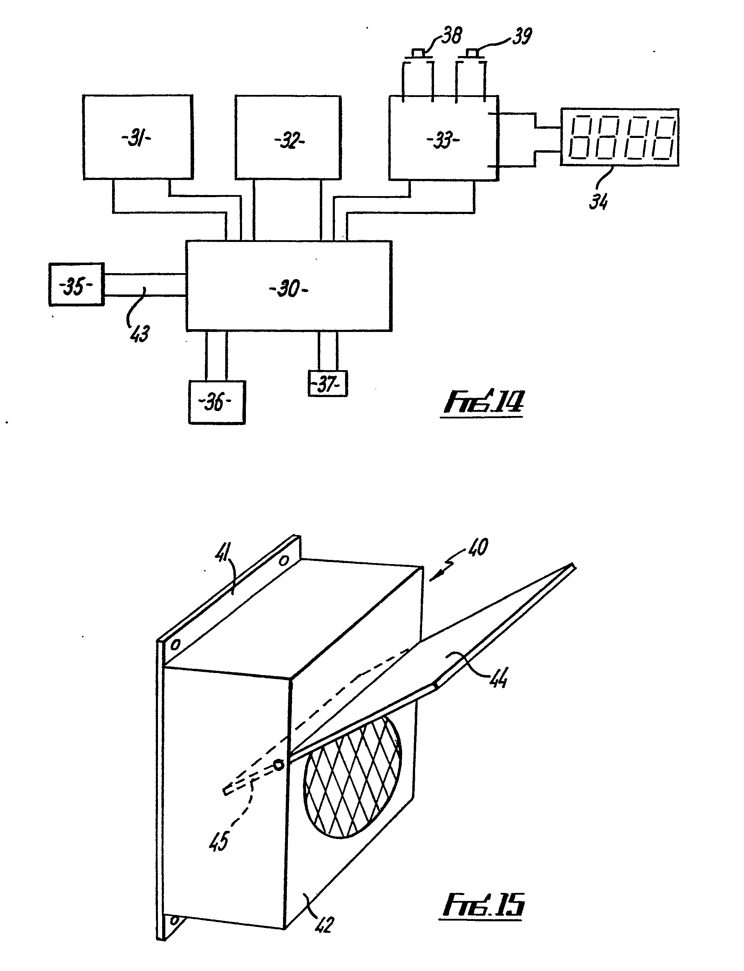

The system so far described can be used to measure the distance of a remote object by positioning the transducer device 1 in line with the object such that the transmitted ultrasonic impulses are reflected back from the object to be received by the device 1, the circuitry being arranged such that the count displayed on the device 15 represents numerically the distance of the object in appropriate imperial or metric units. Figs. 5,6, and 7 show respectively the outputs of the circuits 7, 6, 9, the output of the circuit 9 representing the time taken for the transmitted pulse to cover twice the distance between the transducer and the object. In this respect it will be noted that the delay introduced by the circuit 7 is to allow compensation for any system inaccuracies for calibration purposes. If no such inaccuracies exist or are compensated elsewhere, delay circuit 7 will not be required and Figs. 5 and 6 will then represent the output of circuits 5 and 6.

With the embodiment of Fig. 3, the transmitted and received pulses are used to switch a flip flop circuit 16 between on and off states. The flip flop circuit 16 is connected via an inverter 17 to one input of a comparator 18 and also to an input of an adjustable reference pulse generator 19, an output of such generator 19 being connected to a second input of the comparator 18. The comparator 18 has an output and also is connected to relays 20, 21 via respective high level and low level devices 22, 23.

In use, the transmitted pulse actuates the generator 19 to apply a pulse of preset duration to the comparator 18. At the same time, the relays 20, 21 are reset, and an inverted pulse is fed to the other input of the comparator 18 which pulse is sustained until the received pulse switches the flip flop 16 to the off state. If the pulses fed to the two inputs of the comparator 18 are of equal duration, as for example would be the case if the distance being measured or monitored is at a predetermined acceptable value, the comparator produces no output.  If on the other hand the distance being measured or monitored is greater or less than the predetermined value, the appropriate high level or low level relay 20, 21 is actuated for a duration determined by the difference in duration of the pulse derived from the inverter and the reference pulse, as indicated by Figs. 8, 9, 10.

With the embodiment of Fig. 4, the transmitted and received pulses are used to switch a flip flop circuit 24 between on and off states.  The flip flop circuit 24 controls an audio oscillator 25 which drives a loudspeaker 26.  In use, the tone produced by the loudspeaker is of a duration determined by the time elapse between the received and transmitted pulses.  The tones are repeated at a frequency determined by the clock device 2 and the mark/space ratio of the tones varies in dependence on the distance being measured.  Figs. 11, 12, 13 represent the transmitted and received pulses and the output of the flip flop circuit 24.

The embodiment of Fig. 14 uses microprocessor circuitry and comprises a main printed circuit board (or mother board 30) to which a number of other printed circuit boards are detachably connected (as for example by engagement of edge plugs on such other boards with sockets on the mother board).

These other boards comprise:  a signal processing board 31 which processes the signals fed to and received from the transducer as above described in relation to  Fig. 1; a main control board 32 having thereon a microprocessor integrated circuit device and associated discrete components and ic devices (including interface ROM and RAM devices);
and a driver board 33 having thereon multiple ic devices
and operable to drive an LCD or LED 7-segment digital
display device 34 connected thereto.

The mother board 30 is also connected to a d.c. power
source (not shown), a transducer 35 (of the kind hereinbefore described with reference to Fig. 1) via coaxial
cables 43, an electrical audible warning device 36 (such
as a bleeper) and an output socket 37.  Two press
buttons 38, 39 are connected to the driver board.

In use, signals fed to and received from the transducer
35 are evaluated, in terms of the time gap between same,
by the control board 32 and in accordance therewith the
digital display device 34 is appropriately actuated via
the driving board 33 to give a digital display in imperial
or metric units representative of the distance between
the transducer 35 and the surface or body from which
signals have been reflected back to the transducer.

One of the buttons 38 performs an alarm setting function.
When this button is pressed the digital display changes
sequentially and stops when the button 38 is released.
If the other button 39 is now pressed the digital display
device 34 again displays the measured distance but the
control circuit 32 is now set to trigger an alarm output
when the measured distance displayed on the device 34 is
equal to the distance preset with the button 38.

The alarm output is arranged to actuate the audible
"bleeper" device 36 and the arrangement may be such that
the device is held actuated whilst the distance measured
remains below the preset value.  At the same time an output signal is made available at the socket 37 and if

(EP13777)                        - 10 -
(26.11.81)

desired this may be utilised for the performance of any
suitable automatic control function.

The embodiment described with reference to Fig. 14 is
particularly suitable for use with a vehicle such as
a heavy goods vehicle or bus or other large vehicle
with which difficulties normally arise during reversing
due to limited rearward visibility of the driver. In this
case the transducer 35 may be provided in a housing 40
mounted at the rear of the vehicle, such housing being
as shown in Fig. 15. The housing 40 essentially comprises a rectangular box structure with rear flanges 41
for attachment with fixing bolts to the vehicle, and a
front wall 42 in which the transducer 35 is set. The
transducer 35 has terminals thereto inside the box which
are connected to the said coaxial cables 43 for example
via coaxial plugs/sockets on the box (not shown). The
transducer 35 has a front face exposed externally of the
front wall 42 of the box. The housing 40 also has a
hinged flap 44 movable between an open position as shown
in the drawing and a closed position at which it is pivoted
downwardly and overlies the front face of the transducer
35. The flap 44 is pivotally mounted between side walls
of the housing and has an extension 45 thereto internally
of the housing which is linked to a spring-loaded solenoid
actuated mechansim (not shown). The mechanism normally
acts to spring urge the extension 45 upwardly and thereby
push the flap 44 tightly into the closed position. When
the solenoid is actuated the extension 45 is pulled downwardly and the flap 44 is lifted to the open position.

The solenoid mechanism may be connected to the vehicle
power supply via a reversing switch which is actuated
whenever the vehicle is put into reverse gear. In this
way, the transducer is normally protected from dust and dirt by the cover but is exposed ready for use as soon as the vehicle starts to reverse. During reversing the driver is provided with a continuous digital read-out of the actual distance of the rear of the vehicle from any surface or body behind same and the bleeper sounds as soon as the proximity between the vehicle and such surface or body falls below a predetermined safe limit. This safe limit can be preset to suit requirements with the button 38. Thus, for example, if the vehicle has a lowered tail gate the safe limit can be appropriately set in accordance with the known dimensions thereof. If desired the output from the socket 37 can be used to automatically apply the vehicle brakes or take other action if desired.

The boards 30-33, the digital display 34, the buttons 38, 39 and the bleeper 36 may all be mounted in a common housing located for example in a vehicle cab on or adjacent the usual vehicle dashboard. It is also possible to mount the digital display 34 and the buttons 38, 39 and possibly also the bleeper 36 separately from the other components.

The arrangement of Figs. 14 and 15 can also be used with cranes or heavy machinery or in any other context where a relatively large body is to be manoeuvred in close proximity to another surface or body, the housed transducer being mounted on the large body such that warning can be given whenever such body comes too close to the other surface or body. It is also possible to use the arrangement of Figs. 14 and 15 in other contexts, for example, in a silo to give an indication of the content thereof. In this case the housed transducer may be mounted at the top of the silo to give a measurement of the vertical separation of the transducer and the level of grain (or other material) within the silo.  Similarly
the contents of other bulk storage vessels can also be
monitored or measured.

5. Further, the arrangement of Figs. 14 and 15 may be used
to monitor the separation of two bodies or surfaces
during relative movement therebetween.  Thus the transducer may be mounted on top of a vehicle to ensure
adequate clearance as the vehicle passes under a bridge,
or the transducer may be mounted at the side of a vehicle
to monitor the clearance as the vehicle passes through
a tunnel or the like.  In these and other contexts it
is also possible to locate the transducer and associated
circuitry on the fixed surface or body rather than on the
vehicle or other body whereby for example a flashing
light or siren or other warning device may be actuated
in the event that a vehicle exceeding a predetermined
height tries to pass under a bridge, the transducer in
this case being mounted vertically overhead.

It is also possible to use multiple transducers with the
same control circuitry.  For example, where a vehicle
passes through an arched tunnel multiple transducers can
be used to monitor the clearance between the roof and/or
side walls at different locations.  In this case the
transducers may be repeatedly scanned in sequence by the
circuitry such that the alarm is sounded if the clearance
falls below the preset limit for any one of the transducers.  The display at all times will indicate the
minimum distance which is automatically selected regardless of the number of transducers in the circuit.

The arrangement of Fig. 14 can be readily adapted to suit

0055569

(EP13777)                    - 13 -
(26.11.81)

different applications thereof by replacement of or addition to the boards connected with the mother board 30. It is also possible to provide a user input terminal of a more comprehensive nature than the buttons 38, 39. (and comprising for example a keyboard) so that the system can be preset as desired to meet particular requirements. In this respect, having regard to the use of a computer system with memory function (as provided by board 32) it will be appreciated that it is possible to pre-programme the system in a particularly versatile manner.

It is of course to be understood that the invention is not intended to be restricted to the details of the above embodiments which are described by way of example only.

Thus, for example, in place of the LCD or LED digital display device it is possible to use a 7-segment 4-digit vacuum phosphorescent device.

(EP13777)                    - 14 -
(10.12.81)

Claims:

1.    A distance measuring system comprising an ultrasonic transducer device which is operable to transmit
and receive ultrasonic signals, and an electronic
measuring circuit connected to said device and arranged
to produce an output representative of a time difference
between successive transmitted and received said signals,
characterised in that
said measuring circuit is connected to an output device
(15, 26, 34, 36) operable to produce a sensible output
indicative of the duration of the said time difference.

2.    A system according to claim 1,
characterised in that
said output device is arranged to produce a predetermined
sensible output when the measured time difference
corresponds to a predetermined distance or range of
distances.

3.    A system according to claim 2,
characterised in that
said predetermined sensible output is produced when said
measured time difference corresponds to a distance below
a predetermined value.

4.    A system according to claim 2 or 3,
characterised in that
said predetermined sensible output comprises a predetermined audible output and this is produced additionally
to a visual display.

5.    A system according to claim 4,
characterised in that
said visual display comprises a visual numerical display
representative of a distance corresponding to said time

(EP13777)                    - 15 -
(10.12.81)

difference and which is arranged to change in correspondence with changes in said time difference thereby to give a continuously updated display of actual distance.

6.   A system according to any one of claims 2 to 5, characterised in that
a manual input device (38, 39) is provided for presetting the predetermined distance or range of distances at which the predetermined sensible output is produced.

7.   A system according to claims 5 and 6, characterised in that
said manual input device comprises one or more electrical switches (38, 39) and said output device (34) is arranged to produce said visual display indicative of the preset distance or range of distances during operation of said switch or switches.

8.   A system according to any one of claims 1 to 7, characterised in that
said transducer is provided with a protective cover (44) movable between positions at which it extends over and is retracted away from said transducer.

9.   A system according to claim 8, characterised in that
said cover (44) comprises a hinged cover connected to an electrical operating mechanism therefor.

10.   A system according to any one of claims 1 to 9, characterised in that
said system is a first body relative to a second body, said transducer being mounted on said first body so as to be capable of directing radiated ultrasonic energy

0055569

(EP13777)                    - 16 -
(10.12.81)
at said second body.

11.  A system according to claim 10,
characterised in that
said first body comprises a vehicle body and the transducer is mounted at the rear of same.

12.  A system according to claims 11 and 8 or 9,
characterised in that
said cover is arranged to be moved to its retracted
position when reverse gear of the vehicle is engaged.

Fig.1

Fig.5

Fig.6

Fig.7

Fig.8

Fig.9

Fig.10

Fig.11

Fig.12

Fig.13

Fig.2

Fig.3

Fig.4

_Fig.14_

_Fig.15_